# EUROPÄISCHE PATENTANMELDUNG

(11) **EP 4 502 593 A1**
(43) Veröffentlichungstag der Anmeldung: **05.02.2025**
(21) Anmeldenummer: 23188879.3
(22) Anmeldetag: 01.08.2023
(51) Int. Cl.: G01N 30/86, G01N 30/88

(54) **EINSTELLVERFAHREN FÜR EINE GASANALYSEVORRICHTUNG MITTELS EINER RESPONSE-FUNKTION**

(71) Anmelder: Siemens Aktiengesellschaft, 80333 München (DE)
(72) Erfinder: Strauch, Piotr, 76761 Rülzheim (DE)
(74) Vertreter: Siemens Patent Attorneys

(57) **Zusammenfassung**

Die Erfindung betrifft ein Einstellverfahren (100) für eine Gasanalysevorrichtung (10), bei dem zumindest ein erster Response-Faktor (28) für eine erste Stoffproben-Komponente (21) mittels eines Kalibrier-Gasgemisches (15) ermittelt wird. Basierend hierauf wird eine erste Response-Funktion (31) ermittelt. Weiter wird ein Geräteparameter-Datensatzes (25) mit zumindest einem Geräteparameter (26) erfasst und mit der ersten Response-Funktion (31) verknüpft. Ausgehend von der ersten Response-Funktion (31) wird mittels einer Transfer-Funktion (30) eine zweite Response-Funktion (32) für eine zweite Stoffproben-Komponente (22) ermittelt. Die erste und zweite Response-Funktion (31, 32) werden als Messbetriebs-Parameter (45) vorgegeben. Die Transfer-Funktion (30) ist anhand des Geräteparameter-Datensatzes (25) einstellbar. Weiter betrifft die Erfindung ein entsprechend ausgebildetes Computerprogrammprodukt (65) und eine damit ausgestattete Auswertungseinheit (60). Ferner betrifft die Erfindung eine Gasanalysevorrichtung (10) mit einer solchen Auswertungseinheit (60) und ein System (50), zu dem eine derartige Gasanalysevorrichtung (10) gehört.

## Beschreibung

Die Erfindung betrifft ein Einstellverfahren für eine Gasanalysevorrichtung und ein dazu ausgebildetes Computerprogrammprodukt. Ebenso betrifft die Erfindung eine Auswertungseinheit, die dazu ausgebildet ist, ein solches Einstellverfahren umzusetzen. Weiter betrifft die Erfindung eine Gasanalysevorrichtung, die mit einer derartigen Auswertungseinheit ausgestattet ist. Ferner betrifft die Erfindung ein System zum Ermitteln einer Zusammensetzung einer Stoffprobe mit einer übergeordneten Steuereinheit, die dazu ausgebildet ist, das zugrundeliegende Einstellverfahren zumindest teilweise durchzuführen.

Aus dem Europäischen Patent EP 3 276 342 B1 ist ein Verfahren zum Kalibrieren eines Gaschromatographen bekannt, bei dem Kalibriergemische eingesetzt werden, die Komponenten in bekannten Konzentrationen enthalten. Es werden relative Response-faktoren, kurz RRF, ermittelt und mit universellen relativen Response-Faktoren, kurz uRRF, verglichen. Die universellen relativen Response-Faktoren sind hierbei unveränderlich.

Die Anmeldung WO 2021/081553 A1 offenbart ein Verfahren zum Kalibrieren eines Gassensors, in dem Umgebungsbedingungen im Bereich des Gassensors bestimmt werden. Weiter werden initiale Kalibrierfaktoren bestimmt, die eine Sensitivität des Gassensors auf ein zu messendes Analyt beschreiben.

Gasanalysevorrichtungen werden in einer Vielzahl an Anwendungen in der chemischen Industrie, der Rohstoffgewinnung und Forschung eingesetzt. Um eine hohe Messgenauigkeit zu erreichen, ist ein Vorgeben von präzisen Response-Faktoren unerlässlich. Gleichzeitig besteht die Anforderung, die Kalibrierung von Gasanalysevorrichtungen zu beschleunigen und zu vereinfachen. Es besteht Bedarf an einem Einstellverfahren, das in zumindest einem dieser Aspekte eine Verbesserung bietet.

Die Aufgabenstellung wird durch ein erfindungsgemäßes Einstellverfahren gelöst, das dazu geeignet ist, eine Gasanalysevorrichtung zu kalibrieren, seine Einstellungen zu justieren und/oder zu validieren. Das Einstellverfahren wird an einer Gasanalysevorrichtung durchgeführt, die einen Detektor umfasst, die dazu ausgebildet ist, ein Messsignal auszugeben, das ein Maß für eine erfasste Stoffproben-Komponente ist. Die Stoffproben-Komponente gehört hierbei zu einer Stoffprobe, die als Kalibrier-Gasgemisch oder als Betriebsstoffprobe zugeführt wird. Die Gasanalysevorrichtung ist über eine Mehrzahl an Geräteparametern einstellbar und mit der entsprechend vorliegenden Einstellung betrieben zu werden. Durch die Geräteparameter kann unter anderem ein Messverhalten des Detektors vorgegeben sein. Das Einstellverfahren umfasst einen ersten Schritt, in dem die Gasanalysevorrichtung bereitgestellt wird und zumindest ein erster Response-Faktor für eine erste Stoffproben-Komponente ermittelt wird. Hierzu wird ein Kalibrier-Gasgemisch eingesetzt, das der Gasanalysevorrichtung zugeführt wird. Der erste Response-Faktor kann beispielsweise in einem Chromatogramm einen Zusammenhang zwischen einer Fläche unter einer Kurve des Messsignals am Detektor und der Konzentration der ersten Stoffproben-Komponente beschreiben. Die Kurve des Messsignals wird in Reaktion auf die Erfassung der ersten Stoffproben-Komponente erzeugt. Weiter wird im ersten Schritt eine erste Response-Funktion basierend auf dem ersten Response-Faktor ermittelt. Der erste Response-Faktor stellt einen Punkt auf einem Graphen dar, der die erste Response-Funktion darstellt. Beispielsweise kann die erste Response-Funktion eine Gerade durch einen Koordinaten-Nullpunkt sein, die bereits mit dem ersten Response-Faktor als Punkt auf der Gerade vollständig beschreibbar ist. Alternativ oder ergänzend kann der erste Schritt auch mehrfach durchgeführt werden. Hierbei werden jeweils unterschiedliche Kalibrier-Gasgemische mit unterschiedlichen Konzentrationen der ersten Stoffproben-Komponente eingesetzt und jeweils ein Wert für den ersten Response-Faktor ermittelt. Diese werden im ersten Schritt kombiniert um die erste Response-Funktion zu ermitteln.

Das erfindungsgemäße Einstellverfahren weist ferner einen zweiten Schritt auf, in dem ein Geräteparameter-Datensatz erfasst wird. Der Geräteparameter-Datensatz umfasst eine Mehrzahl an Geräteparametern, durch die der Betrieb der Gasanalysevorrichtung vorgegebenen ist, insbesondere während des ersten Schritts. Der Geräteparameter-Datensatz umfasst folglich zumindest einen vorliegenden Geräteparameter. Der Geräteparameter-Datensatz wird mit der ersten Response-Funktion verknüpft, die im ersten Schritt ermittelt wird.

Ebenso gehört ein dritter Schritt zum beanspruchten Einstellverfahren, in dem eine zweite Response-Funktion für eine zweite Stoffproben-Komponente ermittelt wird. Durch die zweite Response-Funktion wird korrespondierend ein Zusammenhang definiert, wie der Detektor auf eine zweite Stoffproben-Komponente reagiert. Die zweite Response-Funktion wird basierend auf der ersten Response-Funktion und einer Transfer-Funktion ermittelt. Die Transfer-Funktion bildet zumindest teilweise einen Zusammenhang zwischen der ersten und zweiten Response-Funktion ab. Erfindungsgemäß ist die Transfer-Funktion anhand des Geräteparameter-Datensatzes einstellbar. Die Transfer-Funktion kann beispielsweise als Polynom ausgebildet sein, das Koeffizienten aufweise, die durch Geräteparameter im Geräteparameter-Datensatz vorgegeben sind.

Darüber hinaus weist das erfindungsgemäße Einstellverfahren einen vierten Schritt auf, in dem zumindest die zweite Response-Funktion als Messbetriebs-Parameter für die Gasanalysevorrichtung vorgegeben wird. Alternativ können auch die erste und zweite Response-Funktion als Messbetriebsparameter für die Gasanalysevorrichtung im vierten Schritt vorgegeben werden. Die Messbetriebs-Parameter geben vor, wie die Messsignale vom Detektor auszuwerten sind, also welche Konzentration einer Stoffproben-Komponente in einer zugeführten Betriebs-Stoffprobe bei welchem Messsignal vorliegt.

Das erfindungsgemäße Einstellverfahren erlaubt es, auf Basis einer reduzierten Anzahl an Abgleichen zwischen dem Kalibrier-Gasgemisch und Messsignalen vom Detektor die Gasanalysevorrichtung zu kalibrieren. Infolgedessen ist die Gasanalysevorrichtung mit einfacheren Kalibrier-Gasgemischen zu kalibrieren, die eine reduzierte Anzahl an Stoffproben-Komponenten aufweisen. Dementsprechend sind Kalibrier-Gasgemische einsetzbar, die in ihrer Zusammensetzung besonders stabil sind und dadurch auch verlängert lagerbar sind. Ferner werden zusätzliche Kalibrier-Vorgänge für weitere Stoffproben-Komponenten eingespart. Solche Kalibrier-Vorgänge erfordern häufig ein Eingreifen eines Benutzers, was wiederum zu einer erhöhten Fehleranfälligkeit führt. Das erfindungsgemäße Einstellverfahren weist einen gesteigerten Automatisierungsgrad auf und ist dadurch besonders sicher gegen Bedienfehler. Das Einstellen einer Gasanalysevorrichtung wird durch das erfindungsgemäße Einstellverfahren insgesamt vereinfacht, beschleunigt und zuverlässiger gestaltet. Weiter ist das erfindungsgemäße Verfahren auf beliebig viele baugleiche Gasanalysevorrichtungen übertragbar. Eine geräteindividuelle Anpassung des Einstellvorgangs, insbesondere zu einem Kalibrieren der Gasanalysevorrichtung, ist entbehrlich.

In einer Ausführungsform des beanspruchten Einstellverfahrens ist die Transfer-Funktion als mehrdimensionale Transformation ausgebildet, deren Anzahl an Dimensionen der Anzahl an Geräteparametern im Geräteparameter-Datensatz entspricht. Demzufolge sind die Geräteparameter unabhängig voneinander vorgebbar und zu jedem denkbaren Satz an Geräteparametern eine präzise Transformation durchführbar, durch die zumindest die zweite Response-Funktion ermittelbar ist. Das beanspruchte Einstellverfahren ist folglich in einer beliebigen Einstellung der Gasanalysevorrichtung einleitbar. Eine dezidierte Kalibrier-Einstellung des Gasanalysators über einen entsprechenden Geräteparameter-Datensatz ist entbehrlich. Auch hierdurch wird das Einstellen der Gasanalysevorrichtung vereinfacht und beschleunigt. Die Transfer-Funktion kann durch Koeffizienten, beispielsweise für ein Polynom und/oder eine Matrix parametriert sein. Weiter kann die Transfer-Funktion ein mehrdimensionales Array umfassen, insbesondere ein Array, dessen Anzahl an Dimensionen der Anzahl an Geräteparametern im Gerätedatenparameter-Datensatz entspricht. Die Transfer-Funktion kann als zumindest zweidimensionale Funktion, bevorzugt als zumindest dreidimensionale Funktion, besonders bevorzugt als zumindest vierdimensionale Funktion, ausgebildet sein. Die Transfer-Funktion kann durch experimentelle Erprobung an einer baugleichen Gasanalysevorrichtung für unterschiedliche Geräteparameter vorgegeben sein. Alternativ oder ergänzend kann die Transfer-Funktion durch Simulation der Gasanalysevorrichtung, beispielsweise mittels eines Digitalen Zwillings oder eines Modells, vorgegeben sein. Das beanspruchte Einstellverfahren basiert unter anderem auf der Erkenntnis, dass zwischen baugleichen Gasanalysevorrichtungen derart geringe toleranzbedingte Abweichungen vorliegen, dass eine Übertragbarkeit einer entsprechenden Transfer-Funktion zwischen unterschiedlichen Exemplaren der Gasanalysevorrichtungen gegeben ist. Ebenso beruht das beanspruchte Einstellverfahren auf der Erkenntnis, dass das Betriebsverhalten von Gasanalysevorrichtungen, insbesondere deren Detektoren, in Digitalen Zwillingen mit einer derart hohen Realitätstreue simulierbar ist, dass deren Resultate für Einstellungen realer Gasanalysevorrichtungen geeignet ist.

Des Weiteren kann im beanspruchten Einstellverfahren die zweite Response-Funktion ausgehend von der ersten Response-Funktion zumindest teilweise anhand einer universellen relativen Response-Funktion, insbesondere einer zweiten universellen relativen Response-Funktion, ermittelt werden. Die zweite universtelle relative Response-Funktion stellt einen Zusammenhang zwischen der ersten und zweiten Response-Funktion in einem Referenzzustand dar. Die zweite universelle relative Response-Funktion kann hierbei als universeller relativer Response-Faktor ausgebildet sein, wie beispielsweise in EP 3 276 342 A1 näher beschrieben. Der Offenbarungsgehalt von EP 3 276 342 A1 wird durch Verweisung in die vorliegende Anmeldung miteinbezogen. Alternativ kann die zweite universelle relative Response-Funktion auch als korrespondierende Funktion ausgebildet sein, beispielsweise wenn die ersten und/oder zweite Response-Funktion eine Funktion zweiten oder höheren Grades ist. Im Referenzzustand liegt für die erste Stoffproben-Komponente eine erste Referenz-Response-Funktion vor, die über die erste universelle relative Response-Funktion mit einer zweiten Referenz-Response-Funktion für die zweite Stoffproben-Komponente verknüpft ist. Anhand der Transfer-Funktion ist die erste Referenz-Response-Funktion in die erste Response-Funktion in Abhängigkeit vom vorliegenden Geräteparameter-Datensatz umwandelbar. Analog sind auch eine zweite, dritte, usw. Referenz-Response-Funktion in die zugehörige zweite, dritte, usw. Response-Funktion in Abhängigkeit von vorliegenden Geräteparameter-Datensatz umwandelbar. Das beanspruchte Einstellverfahren erlaubt es damit, bekannte universelle relative Response-Faktoren bzw. bekannte universelle relative Response-Funktionen auch unabhängig vom vorliegenden Geräteparameter-Datensatz zu nutzen. Die Güte der Einstellung der Gasanalysevorrichtung ist dadurch stärker datenbasiert, weniger fehleranfällig und weniger vom experimentellen Können ihres Benutzers abhängig. Der Einsatz von kostenintensiven Referenzmaterialien, die nur von wenigen Bezugsquellen, beispielsweise zugelassenen Prüfinstituten, verfügbar sind, wird verringert. Ebenso wird gegenüber Lösungen aus dem Stand der Technik der Bedarf an komplexer weltweiter Logistik und geschultem Personal zur sachgerechten Handhabung der Referenzmaterialien reduziert.

In einer weiteren Ausführungsform des beanspruchten Einstellverfahrens ist das Kalibrier-Gasgemisch, das im ersten Schritt eingesetzt wird, frei von der zweiten Stoffproben-Komponente ausgebildet. Die zweite Response-Funktion für die zweite Stoffproben-Komponente wird somit ermittelt, ohne dass diese physikalisch beim Einstellverfahren präsent ist. Die zweite Stoffproben-Komponente kann ein toxisches, gesundheitsschädliches, entflammbares oder explosives Gas sein. Alternativ kann die zweite Stoffproben-Komponente ein Gas sein, dessen dauerhaft stabile Aufbewahrung in einer Kalibrier-Gasflasche aufwendig ist. Insbesondere kann die zweite Stoffproben-Komponente mit der ersten Stoffproben-Komponente chemisch reaktiv sein, sich also beispielsweise spontan mit der ersten Stoffproben-Komponente zu einem weiteren Stoff umwandeln. Das beanspruchte Einstellverfahren erlaubt es folglich, Response-Funktionen als Messbetriebs-Parameter von Stoffproben-Komponenten vorzugeben, deren reale Handhabung erhöhten Aufwand bzw. Vorsicht erfordert, ohne eine solche aufwendige Handhabung vom Benutzer real zu verlangen. Die zweite Stoffproben-Komponente kann folglich unabhängig von ihrer Gefährlichkeit und/oder einer Verträglichkeitsbedingung gegenüber der ersten Stoffproben-Komponente ausgewählt sein. Insgesamt dient das beanspruchte Einstellverfahren einem kalibrier-gasgemischunabhängigen Einstellen der Gasanalysevorrichtung. Dementsprechend erlaubt es das beanspruchte Einstellverfahren, Kalibrierflaschen mit ungefährlichen und stabilen Kalibrier-Gasgemischen einzusetzen, ohne die funktionelle Vielseitigkeit der Gasanalysevorrichtung zu beeinträchtigen. Insbesondere sind Kalibrier-Gasgemische, die saisonal bedingt nicht verfügbar sind, aufgrund ihres Taupunktes nur geringen Inhalt haben, oder aufwendige Thermostatierung beim Transport benötigen, mit dem beanspruchten Einstellverfahren entbehrlich.

Darüber hinaus können die erste und/oder zweite Response-Funktion als lineare Funktion, insbesondere als Nullpunkts-Gerade, als quadratische Funktion oder als kubische Funktion ausgebildet sein. Weiter alternativ können die erste und/oder zweite Response-Funktion auch Funktionen, insbesondere Polynomialfunktionen, vierten oder höheren Grades sein. Alternativ oder ergänzend können die erste und/oder zweite Response-Funktion auch als abschnittsweise verkettete Funktionen ausgebildet sein. Derartigen Response-Funktionen sind in Abhängigkeit von ihrer Konzentration durch unterschiedliche Funktionen beschrieben, die entsprechend ihren Gültigkeitsbereichen miteinander verkettet sind. Das beanspruchte Einstellverfahren erlaubt es, auch zwischen komplexen Response-Funktionen eine Kopplung oder die Transfer-Funktion zu bilden. Die rechnerische Handhabung auch höherdimensionaler Transformationen von Polynominalfunktionen ist algebraisch durchführbar und ist auch mit reduzierter Rechenleistung umsetzbar. Das beanspruchte Einstellverfahren ist folglich auch auf bestehenden Gasanalysevorrichtungen mit einfacher Hardware, beispielsweise im Rahmen eines Software-Updates, implementierbar.

Ferner kann im dritten Schritt des beanspruchten Einstellverfahrens auch eine dritte Response-Funktion für eine dritte Stoffproben-Komponente ermittelt werden und im vierten Schritt als Messbetriebs-Parameter vorgegeben werden. Die dritte Response-Funktion kann dabei ausgehend von der ersten Response-Funktion in Kombination mit der Transfer-Funktion ermittelt werden. Insbesondere kann eine universelle relative Response-Funktion eingesetzt werden, die einen Zusammenhang zwischen der ersten und dritten Response-Funktion im Referenzzustand beschreibt. Mittels der Transfer-Funktion sind die Response-Funktionen zwischen dem vorliegenden Zustand, der durch die Geräteparameter vorgegeben ist, und dem Referenzzustand umrechenbar, also übertragbar. Das beanspruchte Einstellverfahren ist somit ohne Weiteres auf eine Vielzahl an Stoffproben-Komponenten übertragbar. Das Kalibrier-Gasgemisch kann hierbei frei von der dritten Stoffproben-Komponente sein. Nach Durchführen des beanspruchten Einstellverfahrens ist die zugrundeliegende Gasanalysevorrichtung dazu geeignet, auch eine Konzentration der dritten Stoffproben-Komponente in der Betriebs-Stoffprobe zu ermitteln. Der Funktionsumfang der Gasanalysevorrichtung ist dadurch auf eine Vielzahl an unterschiedlichen Betriebs-Stoffproben datenbasiert erweiterbar. Das beanspruchte Einstellverfahren ist folglich skalierbar und erlaubt es, das technische Potential bestehender Gasanalysevorrichtungen in vereinfachter Weise auszuschöpfen.

Insbesondere kann die Anzahl an Response-Funktionen, die im vierten Schritt als Messbetriebs-Parameter vorgegeben werden, die Anzahl an Komponenten im Kalibrier-Gasgemisch übersteigen. Das Kalibrier-Gasgemisch kann somit als besonders einfaches Gasgemisch aus ungiftigen, chemisch beständigen, unflüchtigen Stoffen sein, die nur eine reduzierte Entmischungsneigung zeigen und/oder eine stabile Temperatur-Charakteristik haben. Dementsprechend können die im beanspruchten Einstellverfahren eingesetzten Kalibrier-Gasgemische in einfacher Weise kosteneffizient hergestellt sein. Das beanspruchte Einstellverfahren ist dazu geeignet, die Gasanalysevorrichtung auch für den Messbetrieb mit komplexen Betrieb-Stoffproben einzustellen. Insbesondere löst das beanspruchte Einstellverfahren den bisherigen Zusammenhang auf, wonach ein Einstellen einer Gasanalysevorrichtung umso komplexer ist, je komplexer die zu vermessende Betriebs-Stoffprobe. Dadurch, dass das beanspruchte Einstellverfahren im Wesentlichen datenbasiert ist, wird der Umgang mit gefährlichen Stoffen so reduziert. Insbesondere kann im beanspruchten Einstellverfahren die Anzahl an Response-Funktionen, die im vierten Schritt vorgegeben wird, zumindest zehn betragen, vorzugsweise mindestens 14, besonders bevorzugt mindestens 17. Das beanspruchte Einstellverfahren ist somit dazu geeignet, auch Kalibriervorgänge zu ersetzen, die in bekannten Lösungen mit mehreren Kalibrier-Gasgemischen durchzuführen sind. Gleichzeitig wird die Fehleranfälligkeit beim Einstellen der Gasanalysevorrichtung reduziert.

In einer weiteren Ausführungsform des beanspruchten Einstellverfahrens können die Geräteparameter eine Stoffproben-Temperatur, einen Stoffproben-Druck, einen Umgebungsdruck, eine Detektorspannung, eine Dosiervorgabe, ein Verstärkungsfaktor, eine Detektorantwortfunktion, eine physikalische Eigenschaft zumindest einer Stoffproben-Komponente, eine chemische Eigenschaft zumindest einer Stoffproben-Komponente, eine Wärmeleitfähigkeit zumindest einer Stoffproben-Komponente, deren Ionisationsquerschnitt und/oder aufbaubezogene Angaben der Gasanalysevorrichtung umfassen. Jeder dieser Geräteparameter beeinflusst eine zu erwartende Response-Funktion, und damit auch ein zu erwartendes Messsignal, beispielsweise ein Chromatogramm. Insbesondere kann infolge des Stoffproben-Drucks und/oder einen Umgebungsdrucks eine Veränderung der zu bestimmenden Stoffmenge auftreten. Weiter wird durch eine Dosiervorgabe die absolute Menge an einer Stoffprobe, und damit auch einer Stoffproben-Komponente bestimmt, die den Detektor erreicht. Durch eine erhöhte Dosierung kann sich in einem Chromatogramm eine sogenannte Peak-Breite ergeben. Beispielsweise kann eine Erhöhung der Detektorspannung zur Erhöhung der Empfindlichkeit verwendet werden, um schwache Messsignale weiterhin quantitativ bestimmen zu können. Dabei kann die Signalantwort je nach Verstärkungsfaktor und Signalniveau von einem linearen zu einem nichtlinearen Verhalten umschlagen. Die Geräteparameter können kontinuierlich oder gestuft einstellbar sein. Die Geräteparameter können als Eingabewerte für den Betrieb eines Digitalen Zwillings der Gasanalysevorrichtung eingesetzt werden. Durch Simulation des Betriebsverhaltens der Gasanalysevorrichtung mittels des Digitalen Zwillings ist die Transfer-Funktion zumindest teilweise bestimmbar.

Darüber hinaus kann das beanspruchte Einstellverfahren einen fünften Schritt umfassen, in dem ein Messbetrieb mit der Gasanalysevorrichtung durchgeführt wird. Der Messbetrieb erfolgt basierend auf den Response-Funktionen, die im vierten Schritt als Messbetriebs-Parameter vorgegeben sind. Während des Messbetriebs wird der Gasanalysevorrichtung eine Betriebs-Stoffprobe zugeführt und die Konzentrationen der darin vorhandenen Stoffproben-Komponenten ermittelt. Es werden im fünften Schritt entsprechend Messdaten ermittelt und gespeichert, also zumindest vorübergehend gespeichert.

Weiter gehört ein sechster Schritt zur beschriebenen Ausführungsform des Einstellverfahrens, bei dem die Messdaten aus dem fünften Schritt als Eingabe für einen Maschinen-Lern-Algorithmus verwendet werden. Die im fünften Schritt ermittelten Messdaten werden dem Maschinen-Lern-Algorithmus zugeführt und dieser damit betrieben. Der Maschinen-Lern-Algorithmus ist dazu ausgebildet, die Transfer-Funktion weiterzubilden, beispielsweise durch Ermitteln geänderter Koeffizienten für das mehrdimensionale Array, das zur Transfer-Funktion gehört. Der Maschinen-Lern-Algorithmus kann beispielsweise als Künstliche Intelligenz, insbesondere als ein Neuronales Netz oder als eine Generative Künstliche Intelligenz, ausgebildet sein. Die Messdaten können beispielsweise einen Trainingsdatensatz bilden, durch den der Maschinen-Lern-Algorithmus weitertrainiert wird. Des Weiteren kann der Maschinen-Lern-Algorithmus auf einer übergeordneten Steuereinheit durchgeführt werden, die über eine kommunikative Datenverbindung mit der Gasanalysevorrichtung gekoppelt ist. Im sechsten Schritt wird anhand des Maschinen-Lern-Algorithmus eine modifizierte Transfer-Funktion ermittelt. Die modifizierte Transfer-Funktion kann für eine erneute Durchführung des beanspruchten Einstellverfahrens bereitgestellt werden. Die erneute Durchführung eine Verifizierung und/oder Justage der Einstellung der Gasanalysevorrichtung sein. Alternativ oder ergänzend kann die erneute Durchführung des beanspruchten Einstellverfahrens auch auf einer anderen Gasanalysevorrichtung erfolgen. Die modifizierte Transfer-Funktion kann beispielsweise über die übergeordnete Steuereinheit an die andere Gasanalysevorrichtung übertragen werden. Die beiden Gasanalysevorrichtungen können dabei baugleich ausgebildet sein. Maschinen-Lern-Algorithmen sind in besonders effektiver Weise dazu geeignet, Parametersätze durch maschinelles Lernen selbsttätig weiterzubilden, also zu verfeinern. Das beanspruchte Einstellverfahren ist somit dazu geeignet, Messdaten von einer Mehrzahl an Gasanalysevorrichtungen auszuwerten und die zugrundeliegende Transfer-Funktion weiterzubilden. Infolgedessen ist die Messgenauigkeit einer Vielzahl an Gasanalysevorrichtungen in einem laufenden Messbetrieb schnell selbsttätig steigerbar.

Ferner kann das beanspruchten Einstellverfahren einen siebenten Schritt umfassen, in dem ein Vergleichswert für zumindest einen Response-Faktor für die zweite Stoffproben-Komponente ermittelt wird in basierend auf dem Vergleichswert eine Vergleichs-Response-Funktion ermittelt wird. Dazu wird im Wesentlichen analog zum ersten Schritt mit einer Kalibrier-Stoffprobe, die die zweite Stoffproben-Komponente in einer bekannten Konzentration enthält, zumindest ein Response-Faktor für die zweite Stoffproben-Komponente ermittelt und als Vergleichswert zumindest vorübergehend gespeichert. Anhand des Vergleichswerts bzw. den Vergleichswerten wird eine Vergleichs-Response-Funktion ermittelt. Beispielsweise genügt ein einziger Vergleichswert zum Ermitteln der Vergleichs-Response-Funktion, wenn die Response-Funktion für die zweite Stoffprobe eine Nullpunkts-Gerade ist.

Das beanspruchte Einstellverfahren weist weiter einen achten Schritt auf, in dem eine Abweichung zwischen der Vergleichs-Response-Funktion und der zweiten Response-Funktion ermittelt wird. Die Abweichung kann beispielsweise als eine Differenz von Steigungsfaktoren der zweiten Response-Funktion und der Vergleichs-Response-Funktion sein, wenn diese jeweils Nullpunkts-Geraden sind. Analog kann die Abweichung jegliche Differenz an Koeffizienten beliebiger Polynominalfunktionen sein, abhängig davon, welchen Grad die zweite Response-Funktion und die Vergleichs-Response-Funktion aufweisen. Die Abweichung wird weiter mit einem Grenzwert verglichen und eine Warnung ausgegeben, wenn die Abweichung den Grenzwert betragsmäßig übersteigt. Der Grenzwert kann, analog zur Abweichung, auch ein Satz an Grenzwerten für Koeffizienten von Polynominalfunktionen sein. Der siebente und achte Schritt wirken im Wesentlichen als eine Gegenprobe, ob die im vierten Schritt vorgegebenen Response-Funktionen realistisch, also plausibel, sind. Das beanspruchte Einstellverfahren ist somit zu einer Selbstüberwachung geeignet. Die Warnung, die bei betragsmäßigem Überschreiten des Grenzwerts erfolgt, kann an den Benutzer und/oder eine Datenschnittstelle ausgegeben werden. Insbesondere kann die Warnung über die Datenschnittstelle an die übergeordnete Steuereinheit ausgegeben werden. Die übergeordnete Steuereinheit kann dazu eingerichtet sein, bei Vorliegen einer Warnung, den Betrieb der Gasanalysevorrichtung zu unterbrechen und/oder in einen damit verbundenen Anlagenprozess einzugreifen. Das beanspruchte Einstellverfahren steigert somit die erzielbare Prozesssicherheit eines Anlagenprozesses, in den eine entsprechend eingestellte Gasanalysevorrichtung eingebunden ist. Ebenso kann das Erkennen einer Abweichung dazu genutzt werden, einen unbeabsichtigten Steuereingriff eines Benutzers zu identifizieren und/oder eine Manipulation bzw. einen Manipulationsversuch an der Gasanalysevorrichtung zu erkennen. Das beanspruchte Verfahren bietet somit einen erhöhten Grad an Sicherheit, sowohl im Sinne von safety als auch im Sinne von security.

Des Weiteren kann im beanspruchten Einstellverfahren zumindest einer der Schritte vom dritten bis zum achten Schritt auf der übergeordneten Steuereinheit durchgeführt werden, die über eine kommunikative Datenverbindung mit der Gasanalysevorrichtung verbunden ist. Die übergeordnete Steuereinheit kann ein Leitrechner, eine Operator Station und/oder eine Computer-Cloud sein, auf der das beanspruchte Einstellverfahren zumindest teilweise durchgeführt wird. Rechenintensive Schritte, wie beispielsweise das Weitertrainieren des Maschinen-Lern-Algorithmus und/oder das Ermitteln der modifizierten Transfer-Funktion sind auf entsprechend leistungsfähige Hardwareplattformen auslagerbar. Das beanspruchte Einstellverfahren ist funktionell teilbar ausgebildet, so dass es auch auf bestehenden Gasanalysevorrichtungen implementierbar ist, die nur über reduzierte Rechenkapazitäten verfügen. Die mit dem Einstellverfahren erzielbare zusätzliche Messgenauigkeit und Vielseitigkeit sind auf einer Vielzahl an bestehenden Gasanalysatoren umsetzbar. Dadurch wird die technisch sinnvolle Lebensdauer dieser Gasanalysatoren verlängert und somit deren Nachhaltigkeit gesteigert. Ebenso erlaubt die funktionelle Teilbarkeit des beanspruchten Einstellverfahrens, eine Mehrzahl an Gasanalysevorrichtungen zentralisiert gesteuert zu betreiben. Unter anderem sind modifizierte Transfer-Funktionen so beschleunigt auf den einzelnen Gasanalysevorrichtungen einsetzbar. Beispielsweise ist durch zentralisierte Updates ein konsistenter Betrieb einer Mehrzahl an Gasanalysevorrichtungen vereinfacht umsetzbar. Ferner ist der Funktionsumfang des Gasanalysevorrichtung erweiterbar, beispielsweise durch Kopplung der Gasanalysevorrichtung mit einer prädiktiven Emissionsüberwachung.

Die zugrundeliegende Aufgabenstellung wird ebenso durch ein erfindungsgemäßes Computerprogrammprodukt gelöst, das dazu ausgebildet ist, Messwerte von Response-Faktoren zu empfangen und zu verarbeiten. Das Computerprogrammprodukt ist weiter dazu ausgebildet, Response-Funktionen zu ermitteln, beispielsweise basierend auf den empfangenen Messwerten. Das Computerprogrammprodukt ist erfindungsgemäß dazu ausgebildet, zumindest eines der oben dargestellten Einstellverfahren durchzuführen. Die Merkmale des zugrundeliegenden Einstellverfahrens sind daher ohne Weiteres auf das beanspruchte Computerprogrammprodukt übertragbar. Das Computerprogrammprodukt kann monolithisch ausgebildet sein, also zum Ausführen auf einer einzigen Hardwareplattform. Alternativ kann das Computerprogrammprodukt modular ausgebildet sein, also eine Mehrzahl an Teilprogrammen umfassen, die auf unterschiedlichen Hardwareplattformen ausgeführt werden und über zumindest eine kommunikative Datenverbindung zusammenwirken. Ferner kann das Computerprogrammprodukt teilweise oder ganz als Software ausgebildet sein. Ebenso kann das Computerprogrammprodukt zumindest teilweise festverdrahtet ausgebildet sein, beispielsweise als Integrierte Schaltung, Chip oder FPGA. Weiter kann das Computerprogrammprodukt als eine Kombination hieraus ausgebildet sein. Das Computerprogrammprodukt kann ein remanenter Speicher, also beispielsweise eine Festplatte, ein solidstate-Laufwerk und/oder ein optischer Datenträger sein, auf dem entsprechender Code als Programmiersprache und/oder maschinenausführbarer Code gespeichert ist.

Ebenso wird die eingangs beschriebene Aufgabe durch eine erfindungsgemäße Auswertungseinheit gelöst. Die Auswertungseinheit ist zum Ermitteln einer Zusammensetzung einer Stoffprobe, insbesondere eines Kalibrier-Gasgemisches und/oder einer Betriebs-Stoffprobe, ausgebildet. Die Stoffprobe wird hierbei einer Gasanalysevorrichtung zugeführt. Das Ermitteln der Zusammensetzung der Stoffprobe erfolgt basierend auf einer Mehrzahl an Response-Funktionen für die jeweiligen Stoffproben-Komponenten, die sich in der Stoffprobe befinden. Die Auswertungseinheit ist weiter dazu ausgebildet, die Response-Funktionen vorzugeben, die bei einem Messbetrieb zu verwenden sind. Dazu ist die Auswertungseinheit mit einem Computerprogrammprodukt ausgestattet. Das Computerprogrammprodukt ist erfindungsgemäß nach einer der oben skizzierten Ausführungsformen ausgebildet. Die Merkmale des Computerprogrammprodukt, und infolgedessen auch des zugrundeliegenden Einstellverfahrens, sind somit analog auf die beanspruchten Auswertungseinheit übertragbar. Die Auswertungseinheit gehört zur Gasanalysevorrichtung und ist zumindest mit dessen Detektor über eine kommunikative Datenverbindung gekoppelt. Die Auswertungsvorrichtung kann insbesondere dazu ausgebildet sein, Messsignale vom Detektor zu empfangen und auszuwerten.

Gleichermaßen wird die oben dargelegte Aufgabenstellung durch eine erfindungsgemäße Gasanalysevorrichtung gelöst. Die Gasanalysevorrichtung ist zu einem Ermitteln einer Zusammensetzung einer Stoffprobe, insbesondere eines Kalibrier-Gasgemisches oder einer Betriebs-Stoffprobe, ausgebildet, die eine Mehrzahl an Stoffproben-Komponenten aufweist. Die Gasanalysevorrichtung weist zumindest einen Detektor auf und eine damit verbundene Auswertungseinheit. Der zumindest eine Detektor kann als Wärmeleitfähigkeitsdetektor, als Flammenionisationsdetektor, als Stickstoff-Phosphor-Detektor, als Elektroneneinfangdetektor, als Massenspektrometer, als Photometer und/oder als Raman-Photometer ausgebildet sein. Die Gasanalysevorrichtung ist über eine Mehrzahl an Geräteparametern einstellbar betreibbar. Erfindungsgemäß ist die Auswertungseinheit der Gasanalysevorrichtung gemäß einer der oben dargelegten Ausführungsformen ausgebildet. Die Merkmale der Auswertungseinheit, und damit auch des zugehörigen Computerprogrammprodukts und des damit umgesetzten Einstellverfahrens sind analog auf die Gasanalysevorrichtung übertragbar. Die Gasanalysevorrichtung kann beispielsweise als Gaschromatograph oder als kontinuierlicher Gasanalysator, auch continuous gas analyzer oder kurz CGA genannt, ausgebildet sein.

Ferner wird die oben skizzierte Aufgabe durch ein erfindungsgemäßes System zum Ermitteln einer Zusammensetzung einer Stoffprobe, insbesondere eines Kalibrier-Gasgemisches oder einer Betriebs-Stoffprobe, gelöst, die eine Mehrzahl an Stoffproben-Komponenten umfasst. Das System weist eine übergeordnete Steuereinheit auf, die über eine kommunikative Datenverbindung mit einer Auswertungseinheit verbunden ist, die ebenso zum erfindungsgemäßen System gehört. Die übergeordnete Steuereinheit ist dazu eingerichtet, zumindest eine zweite Response-Funktion basierend auf einer ersten Response-Funktion zu ermitteln. Hierzu ist die übergeordnete Steuereinheit im erfindungsgemäßen System dazu ausgebildet, zumindest den dritten Schritt in einem Einstellverfahren gemäß einer der oben dargelegten Ausführungsformen durchzuführen.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Ferner sind die einzelnen Merkmale der in den Figuren gezeigten Ausführungsformen auch untereinander und mit den oben skizzierten Merkmalen kombinierbar. Es zeigen im Einzelnen:
- FIG 1: einen schematischen Aufbau einer beanspruchten Gasanalysevorrichtung auf dem eine erste Ausführungsform des beanspruchten Einstellverfahrens durchgeführt wird;
- FIG 2: eine schematische Darstellung eines Stadiums einer zweiten Ausführungsform des beanspruchten Einstellverfahrens;
- FIG 3: eine schematische Darstellung einer dritten Ausführungsform des beanspruchten Einstellverfahrens.

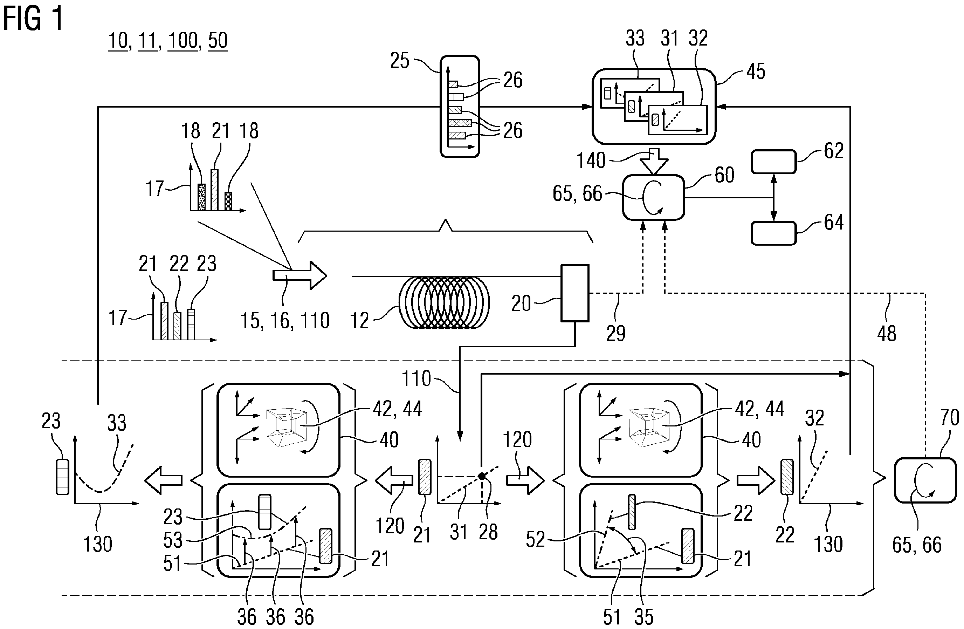

In FIG 1 ist schematisch eine beanspruchte Gasanalysevorrichtung 10 gezeigt, auf der eine erste Ausführungsform des beanspruchten Einstellverfahrens 100 durchgeführt wird. Die Gasanalysevorrichtung 10 ist als Gaschromatograph 11 ausgebildet und umfasst eine Trennvorrichtung 12, in der ein zugeführtes Kalibrier-Gasgemisch 15 oder eine zugeführte Betriebs-Stoffprobe 16 in ihre jeweiligen Stoffproben-Komponenten 21, 22, 23 bzw. Kalibriergase 18 separierbar ist. Die Trennvorrichtung 12 umfasst somit zumindest eine Trennsäule. Die Gasanalysevorrichtung 10 ist dazu ausgebildet, in einem bestimmungsgemäßen Messbetrieb die Zusammensetzung 17 der Betriebs-Stoffprobe 16, also die Konzentrationen der darin enthaltenen ersten, zweiten und dritten Stoffproben-Komponente 21, 22, 23 zu bestimmen. Die Gasanalysevorrichtung 10 umfasst weiter einen Detektor 20, der mit der Trennvorrichtung 12 verbunden ist. Der Detektor 20 ist dazu ausgebildet, Messsignale 29 auszugeben, die ein Maß für die Konzentration, also den Stoffmengenanteil, der erfassten ersten, zweiten bzw. dritten Stoffproben-Komponente 21, 22, 23 darstellen. Die Messsignale 29 sind von der Auswertungseinheit 60 verarbeitbar, die hierzu mit einem Teilprogramm 66 eines entsprechenden Computerprogrammprodukts 65 ausgestattet ist. Die Gasanalysevorrichtung 10 ist über eine Mehrzahl an Geräteparametern 26 einstellbar, die in Kombination einen Geräteparameter-Datensatz 25 bilden. Die Geräteparameter 26 können beispielsweise durch einen Benutzer vorgegeben sein und können unter anderem das Betriebsverhalten des Detektors 20 bestimmen.

In einem ersten Schritt 110 des Einstellverfahrens 100 wird die Gasanalysevorrichtung 10 bereitgestellt und das Kalibrier-Gasgemisch 15 zugeführt. Das Kalibrier-Gasgemisch 15 weist die erste Stoffproben-Komponente 21 in einer bekannten Konzentration auf und ferner weitere Kalibriergase 18. Die erste Stoffproben-Komponente 21 wird durch die Trennvorrichtung 12 von den Kalibriergasen 18 separiert und erreicht den Detektor 20, der in Abhängigkeit von dessen Konzentration in den Geräteparametern 26 ein Messsignal 29 an die Auswertungseinheit 60 ausgibt. Anhand dessen wird zumindest ein erster Response-Faktor 28 für die erste Stoffproben-Komponente 21 ermittelt. Der Response-Faktor 28 gibt einen quantitativen Zusammenhang zwischen der Konzentration der ersten Stoffproben-Komponente 21 im Kalibrier-Gasgemisch 15 und dem zugehörigen Messsignal 29 vom Detektor 20 an. Der erste Response-Faktor 28 ist ein Punkt auf dem Graph einer ersten Response-Funktion 31 für die erste Stoffproben-Komponente 21. Die erste Response-Funktion 31 bildet eine Nullpunkts-Gerade und ist somit bereit allein durch den ersten Response-Faktor 28 vollständig charakterisiert.

Zum Einstellverfahren 100 gehört auch ein zweiter Schritt 120, in dem die erste Response-Funktion 31 mit dem Geräteparameter-Datensatz 25 verknüpft wird. Dazu wird im zweiten Schritt 120 der vorliegende Geräteparameter-Datensatz 25 erfasst und zumindest vorübergehend gespeichert. Durch die Verknüpfung wird festgehalten, welche Geräteparameter 26 beim Durchführen des ersten und zweiten Schritts 110, 120 vorliegen. Basierend hierauf wird ein dritter Schritt 130 des beanspruchten Einstellverfahrens 100 durchgeführt.

Im dritten Schritt 130 wird eine zweite Response-Funktion 32 für eine zweite Stoffproben-Komponente 22 ermittelt, deren Konzentration in der Betriebs-Stoffprobe 16 zu ermitteln ist, die jedoch nicht im Kalibrier-Gasgemisch 15 vorliegt. Hierzu wird im dritten Schritt 130 eine Referenz-Response-Funktion 51 erfasst, die beispielsweise im Computerprogrammprodukt 65 eingespeichert sein kann. Die Referenz-Response-Funktion 51 beschreibt eine Response-Funktion für die erste Stoffproben-Komponente 21 in einem Referenzzustand. Weiter wird eine zweite universelle relative Response-Funktion 52 ermittelt. Die zweite universelle relative Response-Funktion 52 ist durch einen erste Relativ-Funktion 35 charakterisiert. Die Referenz-Response-Funktion 51 und die zweite universelle relative Response-Funktion 52 sind beide lineare Funktionen, insbesondere Nullpunkts-Geraden, so dass die erste Relativ-Funktion 35 eine Winkeldifferenz bzw. eine Geradensteigungsdifferenz ist. Die zweite universelle relative Response-Funktion 52 stellt das zu erwartende Response-Verhalten, also das Antwortverhalten, des Detektors 20 in Reaktion auf die zweite Stoffproben-Komponenten 22 dar, wenn diese den Detektor 20 erreicht und der Referenzzustand vorliegt.

Ferner wird im dritten Schritt 130 eine Transfer-Funktion 40 angewandt, die im Wesentlich eine Umrechnung vom Referenzzustand in den Zustand der Gasanalysevorrichtung 10 erlaubt, der durch die Geräteparameter 26 im Geräteparameter-Datensatz 25 vorgegeben ist, und/oder umgekehrt. Die Transfer-Funktion 40 erlaubt eine mehrdimensionale Transformation. Die Anzahl 42 an Dimensionen der Transfer-Funktion 40 entspricht hierbei der Anzahl an Geräteparametern 26 im Geräteparameter-Datensatz 25. Die Mehrdimensionalität der Transfer-Funktion 40 ist in FIG 1 durch das Tesserakt-Symbol versinnbildlicht. Weiter ist die Transfer-Funktion 40 durch die Geräteparameter 26 im Geräteparameter-Datensatz 25 definiert, also eingestellt. Die Transfer-Funktion 40 umfasst einen Koeffizienten-Satz 44, der in einem entsprechend mehrdimensionalen Array gespeichert ist. Dementsprechend wird basierend auf der ersten Response-Funktion 31 und der Transfer-Funktion 40 die zweite Response-Funktion 32 für die zweite Stoffproben-Komponente 22 ermittelt. Die zweite Response-Funktion 32 entspricht hierbei dem konzentrationsabhängigen Response-Verhalten, also dem Antwortverhalten des Detektors 20, wenn die zweite Stoffproben-Komponente 22 den Detektor 20 in dem Zustand erreicht, der durch die Geräteparameter 26 im vorliegenden Geräteparameter-Datensatz 25 vorgegeben ist. Die Gasanalysevorrichtung 10 ist dadurch im Hinblick auf die zweite Stoffproben-Komponente 22 kalibrierbar, ohne dass die zweite Stoffproben-Komponente 22 im Kalibrier-Gasgemisch 15 vorliegt.

Weiter wird im dritten Schritt 130 auch eine dritte Response-Funktion 33 für eine dritte Stoffproben-Komponente 23 ermittelt. Dies erfolgt analog zur zweiten Response-Funktion 32 ausgehend von der Referenz-Responsefunktion 31 für die erste Stoffproben-Komponente 21. Es wird eine dritte universelle relative Response-Funktion 53 eingesetzt, die durch eine zweite Relativ-Funktion 36 definiert ist. Die dritte universtelle relative Response-Funktion 53 ist eine Polynominalfunktion zweiten Grades, so dass die zweite Relativ-Funktion 36 eine veränderliche Differenz gegenüber der Referenz-Response-Funktion 51 beschreibt. Die dritte universelle relative Response-Funktion 53 beschreibt ein zu erwartendes Response-Verhalten des Detektors 20 im Referenzzustand, wenn die dritte Stoffproben-Komponente 23 den Detektor 20 erreicht. Analog wird ebenso die Transfer-Funktion 40 eingesetzt, um zwischen dem Referenzzustand, der der Anwendung der dritten universellen relativen Response-Funktion 53 zugrunde liegt, und dem Zustand beschreibt, der durch die Geräteparameter 26 im vorliegenden Geräteparameter-Datensatz 25 vorgegeben ist. Die dritte Response-Funktion 33, die anhand dessen im dritten Schritt 130 ermittelt wird, beschreibt das zu erwartende Response-Verhalten des Detektors 20 im vorliegenden Zustand der Gasanalysevorrichtung 10 infolge des Geräteparameter-Datensatzes 25, wenn die dritte Stoffproben-Komponente 33 den Detektor 20 erreicht. Korrespondierend ist die Gasanalysevorrichtung 10 im Hinblick auf die dritte Stoffproben-Komponente 23 kalibierbar, ohne dass das Kalibrier-Gasgemisch 15 diese enthält.

Das Einstellverfahren 100 weist ferner einen vierten Schritt 140 auf, in dem die erste, zweite und dritte Response-Funktion 31, 32, 33 als Messbetriebs-Parameter 45 bereitgestellt werden und der Auswertungseinheit 60 vorgegeben werden. Durch Vorgeben der Messbetriebs-Parameter 45 ist ein Messbetrieb eingestellt, in dem die Betriebs-Stoffprobe 16 der Gasanalysevorrichtung 10 zugeführt wird und deren Zusammensetzung 17 durch die Gasanalysevorrichtung 10 ermittelt wird. Die ermittelte Zusammensetzung 17 kann über eine Anzeigeeinheit 62 und/oder eine Datenschnittstelle 64 ausgegeben werden.

Der zweite und dritte Schritt 120, 130 des Einstellverfahrens 100 werden in der in FIG 1 gezeigten Ausführungsform auf einer übergeordneten Steuereinheit 70 durchgeführt, die mit der Auswertungseinheit 60 über eine kommunikative Datenverbindung 48 verbunden ist. Die übergeordnete Steuereinheit 70 ist mit einem Teilprogramm 66 des Computerprogrammprodukts 65 versehen, zu dem auch das Teilprogramm 66 auf der Auswertungseinheit 60 gehört. Die Teilprogramme 66 wirken über die kommunikative Datenverbindung 48 zusammen und sind dazu ausgebildet, das Einstellverfahren 100 durchzuführen. Die Gasanalysevorrichtung 10 und die übergeordnete Steuereinheit 70 gehören zu einem System 50 zum Ermitteln einer Zusammensetzung 17 einer Stoffprobe 15, 16, die der Gasanalysevorrichtung 10 zugeführt wird.

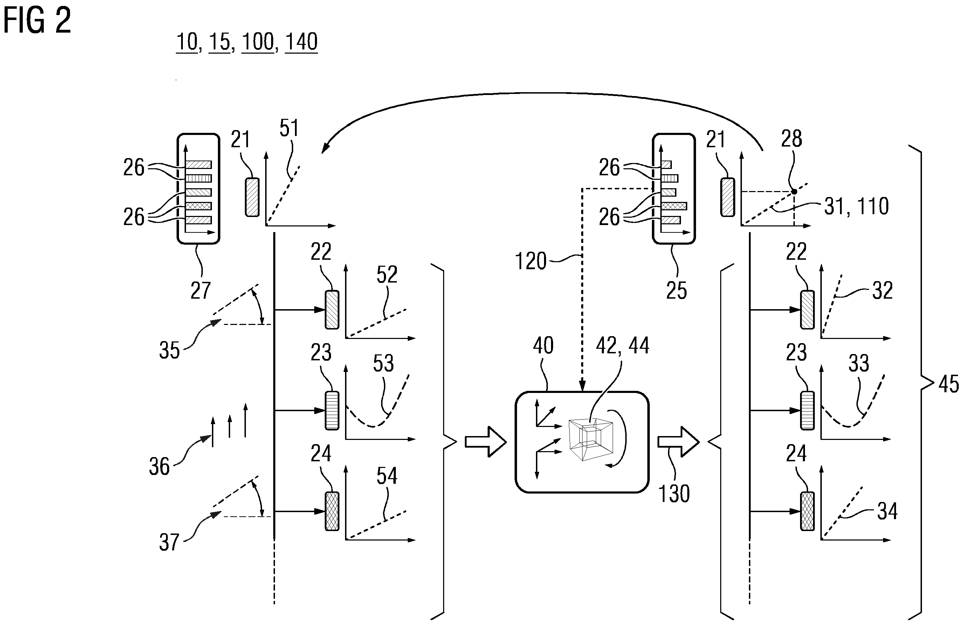

Eine zweite Ausführungsform des beanspruchten Einstellverfahrens 100 ist in FIG 2 in einem Stadium schematisch dargestellt. Im ersten Schritt 110 des Einstellverfahrens 100 wird die nicht näher gezeigte Gasanalysevorrichtung 10 bereitgestellt und ein erster Response-Faktor 28 ermittelt, der zu einer ersten Response-Funktion 31 gehört. Die erste Response-Funktion 31 ist als Nullpunkts-Gerade ausgebildet, so dass diese bereits durch den ersten Response-Faktor 28 vollständig beschreibbar ist. Durch die erste Response-Funktion 31 ist die Gasanalysevorrichtung 10 im Hinblick auf die erste Stoffproben-Komponente 21 kalibrierbar. Die erste Stoffproben-Komponente 21 ist in einem nicht näher gezeigten Kalibrier-Gasgemisch 15 enthalten. Weiter wird in einem zweiten Schritt 120 ein Geräteparameter-Datensatz 25 mit einer Mehrzahl an Geräteparametern 26 erfasst. Durch die Geräteparameter 26 ist der Betrieb der Gasanalysevorrichtung 10 einstellbar. Die Geräteparameter 26 im Geräteparameter-Datensatz 25 beschreiben, in welcher Einstellung die Gasanalysevorrichtung 10 während des Einstellverfahrens 100 betrieben wird.

Zur ersten Stoffproben-Komponente 21 liegt eine Referenz-Response-Funktion 51 vor, die in einem Referenzzustand der Gasanalysevorrichtung 10 diese im Hinblick auf die erste Stoffproben-Komponente 21 kalibriert. Im Referenzzustand liegt ein Referenz-Geräteparameter-Datensatz 27 vor, der als idealisierter Zustand aufzufassen ist. Dies ist in FIG 2 durch die identischen Werte für die Geräteparameter 26 versinnbildlicht. An die Referenz-Response-Funktion 51 ist eine Mehrzahl an universellen relativen Response-Funktionen 52, 53, 54 für eine zweite, dritte vierte, usw. Stoffproben-Komponente 22, 23, 24 gekoppelt. Für jede der universellen relativen Response-Funktionen 52, 53, 54 liegt eine Relativ-Funktion 35, 36, 37 vor, die einen Bezug zur Referenz-Response-Funktion 51 definiert. Die zweite universelle relative Response-Funktion 52 ist wie die Referenz-Response-Funktion 51 eine Nullpunkts-Gerade. Die erste Relativ-Funktion 35 definiert, dass zwischen der Referenz-Response-Funktion 51 und der zweiten universellen relativen Response-Funktion 52, also deren Graphen, eine Winkeldifferenz vorliegt. Dies gilt analog auch für den Zusammenhang zwischen der Referenz-Response-Funktion 51 und der dritten universellen relativen Response-Funktion 54. Die dritte universelle relative Response-Funktion 53 ist als Funktion zweiten Grades ausgebildet, so dass die zweite Relativ-Funktion 36 eine über das mögliche Konzentrationsspektrum veränderliche Funktion ist. Dementsprechend stellt die zweite Relativ-Funktion 36 einen rechnerischen Zusammenhang zwischen den Graphen der dritten universellen relativen Response-Funktion 53 und der Referenz-Response-Funktion 51 dar. Die universellen relativen Response-Funktionen 52, 53, 54 für die zweite, dritte, vierte, usw. Stoffproben-Komponenten 32, 33, 34 können als Wertetabelle vorliegen.

Der im zweiten Schritt 120 erfasste Geräteparameter-Datensatz 25 wird weiter eingesetzt, um eine Transfer-Funktion 40 einzustellen. Hierzu wird der Geräteparameter-Datensatz 25, also dessen Geräteparameter 26, als Eingabe genutzt. Durch die Transfer-Funktion 40 sind die universellen relativen Responsefunktionen 52, 53, 54, die auf den Referenzzustand, und damit auf den Referenz-Geräteparameter-Datensatz 27 bezogen sind, auf den vorliegenden Zustand der Gasanalysevorrichtung 10 übertragbar, der durch den Geräteparameter-Datensatz 25 definiert ist. Die Transfer-Funktion 40 weist eine Anzahl 42 an Dimensionen auf, die der Anzahl an Geräteparametern 26 im Geräteparameter-Datensatz 25 entspricht. Die Mehrdimensionalität des Geräteparameter-Datensatzes 25 ist in FIG 2 durch das Tesserakt-Symbol versinnbildlicht. Zur Transfer-Funktion 40 gehört ein Koeffizienten-Satz 44 gehören, durch den die Transfer-Funktion 40 parametriert ist. Durch Anwendung der Transfer-Funktion 40 wird aus der zweiten universellen Response-Funktion 52 die zweite Response-Funktion 32 für die zweite Stoffproben-Komponente 22 ermittelt. Die zweite Response-Funktion 32 ist durch Anwendung der Transfer-Funktion 40 auf den Zustand der Gasanalysevorrichtung 10 bezogen, der durch die Geräteparameter 26 im Geräteparameter-Datensatz 25 beschrieben ist. Analog werden ausgehend von der dritten, vierten, usw. universellen relativen Response-Funktion 53, 54 korrespondierend die dritte, vierte, usw. Response-Funktion 33, 34 für die dritte, vierte, usw. Stoffproben-Komponente 23, 24 ermittelt. Das nicht näher Kalibrier-Gasgemisch 15 ist hierbei frei von der zweiten, dritten und vierten Stoffproben-Komponente 32, 33, 34. Die Anzahl an Response-Funktionen 32, 33, 34, die im dritten Schritt 130 ermittelt werden, ist höher als die Anzahl an Stoffproben-Komponenten im Kalibrier-Gasgemisch 15. Die zweite, dritte, vierte usw. Stoffproben-Komponente 22, 23, 24 sind folglich unabhängig von der Zusammensetzung des Kalibrier-Gasgemisches 15 auswählbar. Die Response-Funktionen 32, 33, 34 werden in einem nicht näher gezeigten vierten Schritt 140 als Messbetriebs-Parameter 45 für die Gasanalysevorrichtung 10 vorgegeben.

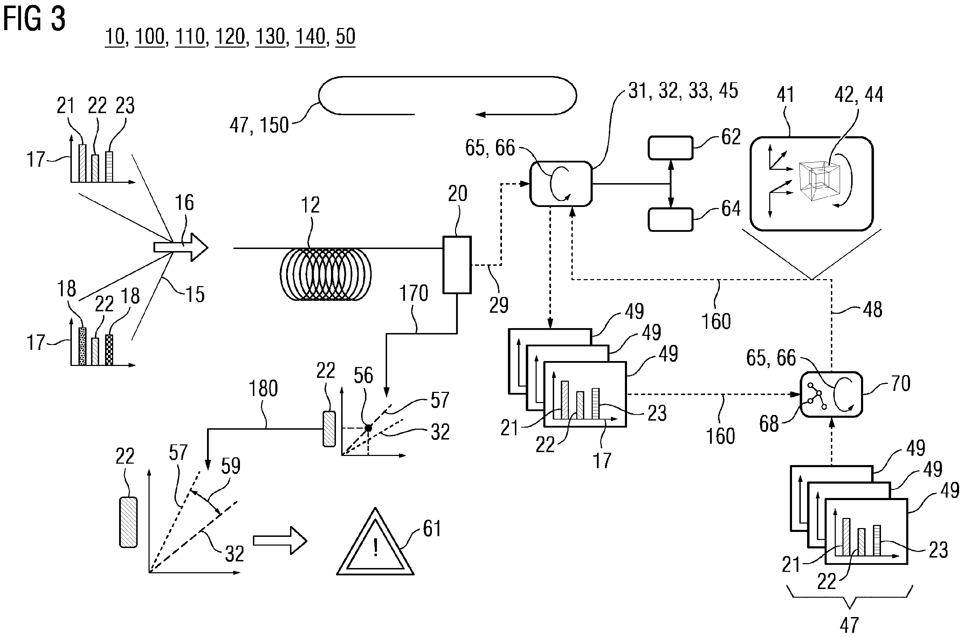

Eine dritte Ausführungsform des beanspruchten Einstellverfahrens 100, das an einer Gasanalysevorrichtung 10 durchgeführt wird, ist in FIG 3 schematisch dargestellt. Die Gasanalysevorrichtung 10 ist als Gaschromatograph 11 ausgebildet und umfasst eine Trennvorrichtung 12, die mit einem Detektor 20 verbunden ist, der wiederum mit einer Auswertungseinheit 60 gekoppelt ist. Der Detektor 20 ist dazu ausgebildet, Messsignale 29 an die Auswertungseinheit 60 auszugeben, die durch ein darauf gespeichertes Teilprogramm 66 eines Computerprogrammprodukts 65 verarbeitbar sind. Die in FIG 3 dargestellte Ausführungsform des Einstellverfahrens 100 geht davon aus, dass der erste, zweite, dritte und vierte Schritt 110, 120, 130, 140 bereits wirksam durchgeführt sind, wie beispielsweise in FIG 1 oder FIG 2 skizziert. Es liegen somit eine erste, zweite und dritte Response-Funktion 31, 32, 33 vor, die in der Auswertungseinheit 60 als Messbetriebs-Parameter 45 vorgegeben sind.

Es wird ein fünfter Schritt 150 durchgeführt, in dem ein Messbetrieb 47 durchgeführt wird, in dem eine Betriebs-Stoffprobe 16 kontinuierlich oder hintereinander mehrere Betriebs-Stoffproben 16 mit einer veränderlichen Zusammensetzung 17 untersucht werden. Der Messbetrieb 47, in dem die zumindest eine Betriebs-Stoffprobe 16 auf ihre Zusammensetzung 17 untersucht wird, erfolgt im Wesentlichen zyklisch. Hierbei werden die erste, zweite und dritte Response-Funktion 31, 32, 33 eingesetzt, die im vierten Schritt 140 als Messbetriebs-Parameter 45 vorgegeben sind. Es werden Messdaten 49 für die Konzentrationen der ersten, zweiten und dritten Stoffproben-Komponente 21, 22, 23, also die Zusammensetzung 17 der entsprechenden Betriebs-Stoffprobe 16 zumindest vorübergehend gespeichert und in einem sechsten Schritt 160 einem Maschinen-Lern-Algorithmus 68 zugeführt. Dazu ist die übergeordnete Steuereinheit 70 über eine kommunikative Datenverbindung 48 mit der Auswertungseinheit 60 verbunden. Die ermittelten Messdaten 49 sind über die Anzeigeeinheit 62 und/oder die Datenschnittstelle 64 der Auswertungseinheit 60 ausgebbar. Der Maschinen-Lern-Algorithmus 68 ist als Neuronales Netz ausgebildet und läuft auf einer übergeordneten Steuereinheit 70 ab. Auf der übergeordneten Steuereinheit 70 läuft auch ein Teilprogramm 66 des Computerprogrammprodukts 65 ab, mit dem das Einstellverfahren 100 umgesetzt wird. Der Maschinen-Lern-Algorithmus 68 ist zumindest funktionell mit dem Computerprogrammprodukt 65 gekoppelt oder gehört zu diesem. Während des sechsten Schritts 160 werden die Messdaten 49, die im fünften Schritt 150 erzeugt und gespeichert werden, als Trainingsdatensatz für den Maschinen-Lern-Algorithmus 68 eingesetzt. Zusätzlich hierzu sind auch Messdaten 49 von anderen Gasanalysevorrichtungen 10 einsetzbar, die baugleich ausgebildet sind. Der Trainingsdatensatz kann somit aus den Messdaten 49 aus dem fünften Schritt 150 und Fremd-Messdaten Der Maschinen-Lern-Algorithmus 68 ist dazu ausgebildet, durch Trainieren mit den Messdaten 49 eine modifizierte Transfer-Funktion 40 zu erstellen. Insbesondere ist dadurch der Koeffizienten-Satz 44, der zur Transfer-Funktion 40 gehört, aktualisierbar. Die Transfer-Funktion 40 weist eine Anzahl 42 an Dimensionen auf, die der Anzahl an Geräteparametern 26 in einem Geräteparameter-Datensatz 25 entsprechen, wie exemplarisch in FIG 1 gezeigt. Die modifizierte Transfer-Funktion 40 wird im sechsten Schritt 160 an die Auswertungseinheit 60 ausgegeben. Basierend auf der modifizierten Transfer-Funktion 40 sind zumindest der dritte und vierte Schritt 130, 140 des zugrundeliegenden Einstellverfahrens 100 erneut durchführbar, so dass die erste, zweite und dritte Response-Funktion 31, 32, 33 präzisiert ermittelbar sind. Durch den fünften und sechsten Schritt 150, 160 ist die Transfer-Funktion 40 selbsttätig weiterbildbar. Insbesondere bei Betrieb einer Mehrzahl an Gasanalysevorrichtungen 10 ist so deren Kalibriergenauigkeit über Maschinelles Lernen so steigerbar.

Ebenso wird in der Ausführungsform nach FIG 3 ein siebenter Schritt 170 ausgeführt, in dem ein Kalibrier-Gasgemisch 15 der Gasanalysevorrichtung 10 zugeführt wird. Das im siebenten Schritt 170 eingesetzte Kalibrier-Gasgemisch 15 weist die zweite Stoffproben-Komponente 22 in einer bekannten Konzentration auf. Neben der zweiten Stoffproben-Komponente 22 weist das Kalibrier-Gasgemisch 15 weitere Kalibriergase 18 auf, die nicht zu den zu messenden Stoffproben-Komponenten 21, 23 gehören. Im siebenten Schritt 170 wird, im Wesentlichen analog zum ersten Schritt 110, wie in FIG 1 gezeigt, ein Vergleichswert 56 für einen Response-Faktor ermittelt. Der Vergleichswert 56 liegt auf einer Nullpunkts-Gerade, die eine Vergleichs-Response-Funktion 57 darstellt. Die zweite Response-Funktion 32 für die zweite Stoffproben-Komponente 22 ist ebenfalls als Nullpunkts-Gerade ausgebildet. Bei korrekter Kalibrierung im ersten bis vierten Schritt 110, 120, 130, 140 des beanspruchten Einstellverfahrens 100 liegt zwischen der zweiten Response-Funktion 32 und der Vergleichs-Response-Funktion 57 eine minimale Abweichung 59 vor, vorzugsweise eine Abweichung 59 von Null. Das Einstellverfahren 100 weist weiter einen achten Schritt 180 auf, in dem die Abweichung 59 zwischen der zweiten Response-Funktion 32 und der Vergleichs-Response-Funktion 57 ermittelt wird. Da die zweite Response-Funktion 32 und die Vergleichs-Response-Funktion 57 als Nullpunkts-Geraden ausgebildet sind, ist die Abweichung 59 als Winkel zwischen diesen bzw. als Steigungsfaktordifferenz darstellbar. Die Abweichung 59 weist bei anders ausgebildeten Vergleichs-Response-Funktionen 57 bzw. zweiten Response-Funktionen 32 entsprechend andere Formen auf, beispielsweise wenn diese Polynominalfunktionen zweiter, dritter oder höherer Ordnung sind. Ferner wird die Abweichung 59 im achten Schritt 180 mit einem nicht näher dargestellten Grenzwert verglichen. Es wird eine Warnung 61 ausgegeben, wenn die Abweichung 59 den Grenzwert betragsmäßig überschreitet. Die Warnung 61 kann über die Anzeigeeinheit 62 und/oder die Datenschnittstelle 64 ausgegeben werden. Der Grenzwert kann durch einen Benutzer oder das Computerprogrammprodukt 65 vorgegeben sein. Der siebente und achte Schritt 170, 180 stellen im Wesentlichen eine experimentelle Verifikation der im vierten Schritt 140 vorgegebenen zweiten Response-Funktion 32 dar. Das zugrundeliegende Einstellverfahren 100 ist somit zur Selbstüberwachung geeignet.

Das im siebtenten und achten Schritt 170, 180 eingesetzt Kalibrier-Gasgemisch 15 kann auch das Kalibrier-Gasgemisch 15 aus dem ersten Schritt 110 sein, wenn dieses die erste und zweite Stoffproben-Komponente 21, 22 in bekannter Konzentration enthält. Kalibrier-Gasgemische 15 mit zwei Stoffproben-Komponenten 21, 22 sind in zahlreichen Fällen in einfacher Weise mit erhöhter Präzision herstellbar. Der siebente und achte Schritt 170, 180 können zusätzlich analog für eine dritte Stoffproben-Komponente 23 durchgeführt werden, und so eine weitere Möglichkeit zur Verifikation bereitgestellt werden. Je mehr Stoffproben-Komponenten 21, 22, 23 das Kalibrier-Gasgemisch 15 in bekannter Konzentration aufweist, umso mehr gegenseitige Überprüfungen der Response-Funktionen 31, 32, 33 sind durchführbar, was zu einer erhöhten Zuverlässigkeit führt. Dadurch ist mit komplexen Kalibrier-Gasgemischen 15 im beanspruchten Einstellverfahren 100 eine erhöhte Zuverlässigkeit beim Kalibrieren der Gasanalysevorrichtung 10 gewährleistet. Gleichzeitig kann die Gasanalysevorrichtung 10 mit dem beanspruchten Einstellverfahren 100 für eine Vielzahl an Stoffproben-Komponenten 21, 22, 23 kalibriert werden. Die Gasanalysevorrichtung 10 und die übergeordnete Steuereinheit 70 gehören zu einem System 50 zum Ermitteln einer Zusammensetzung 17 einer Stoffprobe 15, 16, die der Gasanalysevorrichtung 10 zugeführt wird.

## Patentansprüche

1. Einstellverfahren (100) für eine Gasanalysevorrichtung (10), die einen Detektor (20) umfasst und die über eine Mehrzahl an Geräteparametern (26) einstellbar betreibbar ist, umfassend die Schritte:
a) Bereitstellen der Gasanalysevorrichtung (10) und Ermitteln zumindest eines ersten Response-Faktors (28) für eine erste Stoffproben-Komponente (21) mittels eines Kalibrier-Gasgemisches (15) und Ermitteln einer ersten Response-Funktion (31) anhand zumindest des ersten Response-Faktors (28);
b) Erfassen eines Geräteparameter-Datensatzes (25), der zumindest einen der vorliegenden Geräteparameter (26) umfasst und Verknüpfen des Geräteparameter-Datensatzes (25) mit der ersten Response-Funktion (31);
c) Ermitteln einer zweiten Response-Funktion (32) für eine zweite Stoffproben-Komponente (22) ausgehend von der ersten Response-Funktion (31) mittels einer Transfer-Funktion (30);
d) Vorgeben zumindest der zweiten Response-Funktion (31, 32) als Messbetriebs-Parameter (45) für die Gasanalysevorrichtung (10) ;
wobei die Transfer-Funktion (30) anhand des Geräteparameter-Datensatzes (25) einstellbar ist.

2. Einstellverfahren (100) nach Anspruch 1, **dadurch gekennzeichnet, dass** die Transfer-Funktion (30) eine mehrdimensionale Transformation ist, deren Anzahl an Dimensionen (42) der Anzahl an Geräteparametern (26) im Geräteparameter-Datensatz (25) entspricht.

3. Einstellverfahren (100) nach Anspruch 1 oder 2, **dadurch gekennzeichnet, dass** die zweite Response-Funktion (32) zumindest teilweise basierend auf einer universellen relativen Response-Funktion (52) gegenüber der ersten Response-Funktion (31) ermittelt wird.

4. Einstellverfahren (100) nach einem der Ansprüche 1 bis 3, **dadurch gekennzeichnet, dass** das Kalibrier-Gasgemisch (15) frei von der zweiten Stoffproben-Komponente (22) ausgebildet ist.

5. Einstellverfahren (100) nach einem der Ansprüche 1 bis 4, **dadurch gekennzeichnet, dass** die erste und/oder zweite Response-Funktion (31, 32) als lineare Funktion, als quadratische Funktion, als kubische Funktion und/oder als abschnittsweise verkettete Funktion ausgebildet sind.

6. Einstellverfahren (100) nach einem der Ansprüche 1 bis 5, **dadurch gekennzeichnet, dass** im Schritt c) auch eine dritte Response-Funktion (33) für eine dritte Stoffproben-Komponente (21, 22, 23) ermittelt wird und im Schritt d) als Messbetriebs-Parameter (45) vorgegeben wird.

7. Einstellverfahren (100) nach Anspruch 6, **dadurch gekennzeichnet, dass** die Anzahl an in Schritt d) vorgegebenen Response-Funktionen (31, 32, 33) die Anzahl an Komponenten im Kalibrier-Gasgemisch (15) übersteigt.

8. Einstellverfahren (100) nach einem der Ansprüche 1 bis 7, **dadurch gekennzeichnet, dass** die Geräteparameter (26) eine Dosierangabe, eine Stoffproben-Temperatur, einen Stoffproben-Druck, einen Umgebungsdruck, eine Detektorspannung, eine Dosierangabe, ein Verstärkungsfaktor, eine Detektorantwortfunktion, eine physikalische Eigenschaft zumindest einer Stoffproben-Komponente, eine chemische Eigenschaft zumindest einer Stoffproben-Komponente, eine Wärmeleitfähigkeit zumindest einer Stoffproben-Komponente, deren Ionisationsquerschnitt und/oder aufbaubezogene Angaben der Gasanalysevorrichtung umfassen.

9. Einstellverfahren (100) nach einem der Ansprüche 1 bis 8, **dadurch gekennzeichnet, dass** das Einstellverfahren (100) weiter die Schritte umfasst:
e) Durchführen eines Messbetriebs (47) mit der Gasanalysevorrichtung (10) anhand der ermittelten Response-Funktionen (31, 32, 33) und Speichern von Messdaten (49);
f) Verwenden der Messdaten (49) als Eingabe für einen Maschinen-Lern-Algorithmus (68) und Ermitteln einer modifizierten Transfer-Funktion (30).

10. Einstellverfahren (100) nach einem der Ansprüche 1 bis 9, **dadurch gekennzeichnet, dass** das Einstellverfahren (100) weiter die Schritte umfasst:
g) Ermitteln eines Vergleichswerts (56) für zumindest einen Response-Faktor und Ermitteln einer Vergleichs-Response-Funktion (57) für die zweite Stoffproben-Komponente (22);
h) Ermitteln einer Abweichung (59) zwischen der Vergleichs-Response-Funktion (57) und der zweiten Response-Funktion (32) und Ausgeben einer Warnung (61), wenn die Abweichung (59) einen Grenzwert betragsmäßig übersteigt.

11. Einstellverfahren (100) nach einem der Ansprüche 1 bis 10, **dadurch gekennzeichnet, dass** zumindest einer der Schritte c) bis h) auf einer übergeordneten Steuereinheit (70) durchgeführt wird, die über eine kommunikative Datenverbindung (48) mit der Gasanalysevorrichtung (10) verbunden ist.

12. Computerprogrammprodukt (65), das zum Empfangen und Verarbeiten von Messwerten eines Response-Faktors (28) und zum Ermitteln von Response-Funktionen (31, 32, 33) ausgebildet ist, **dadurch gekennzeichnet, dass** das Computerprogrammprodukt (65) zum Durchführen zumindest eines Einstellverfahrens (100) nach einem der Ansprüche 1 bis 11 ausgebildet ist.

13. Auswertungseinheit (60) zum Ermitteln einer Zusammensetzung (17) einer Stoffprobe (15, 16), die einer Gasanalysevorrichtung (10) zugeführt wird, mittels einer Mehrzahl an Response-Funktionen (31, 32, 33), und die Auswertungseinheit (60) zum Vorgeben der Response-Funktionen (31, 32, 33) mit einem Computerprogrammprodukt (65) ausgestattet ist, **dadurch gekennzeichnet, dass** das Computerprogrammprodukt (65) nach Anspruch 12 ausgebildet ist.

14. Gasanalysevorrichtung (10) zum Ermitteln einer Zusammensetzung einer Stoffprobe (15, 16) mit einer Mehrzahl an Stoffproben-Komponenten (21, 22, 23), die einen Detektor (20) und eine Auswertungseinheit (60) umfasst, wobei die Gasanalysevorrichtung (10) über eine Mehrzahl an Geräteparametern (26) einstellbar betreibbar ist, **dadurch gekennzeichnet, dass** die Auswertungseinheit (60) nach Anspruch 13 ausgebildet ist.

15. System (50) zum Ermitteln einer Zusammensetzung einer Stoffprobe (15, 16) mit einer Mehrzahl an Stoffproben-Komponenten (21, 22, 23), umfassend eine übergeordnete Steuereinheit (70), die über eine kommunikative Datenverbindung (48) mit einer Auswertungseinheit (60) verbunden ist, wobei die übergeordnete Steuereinheit (70) dazu ausgebildet ist, zumindest eine zweite Response-Funktion (32) anhand einer ersten Response-Funktion (31) zu ermitteln, **dadurch gekennzeichnet, dass** das die übergeordnete Steuereinheit (70) dazu eingerichtet ist, zumindest Schritt c) gemäß einem Einstellverfahren (100) nach einem der Ansprüche 1 bis 11 durchzuführen.
